# EUROPÄISCHE PATENTANMELDUNG

(11) **EP 4 560 887 A1**
(43) Veröffentlichungstag der Anmeldung: **28.05.2025**
(21) Anmeldenummer: 23211172.4
(22) Anmeldetag: 21.11.2023
(51) Int. Cl.: H02K 1/14

(54) **STATORSEGMENTE MIT ANEINANDER ANLIEGENDEN VERBINDUNGSELEMENT**

(71) Anmelder: Hilti Aktiengesellschaft, 9494 Schaan (LI)
(72) Erfinder: Dotz, Boris, 86937 Scheuring (DE); Ludwig, Wolfgang, 86874 Zaisertshofen (DE); Schaefer, Thomas, 86836 Obermeitingen (DE); Asmus, Torsten, 87600 Kaufbeuren (DE); Gerold, Johannes, 82418 Murnau (DE); Kaibach, Werner, 86916 Kaufering (DE)
(74) Vertreter: Hilti Aktiengesellschaft Corporate Intellectual Property

(57) **Zusammenfassung**

Stator für einen Elektromotor enthaltend wenigstens eine erste und zweite Zahneinrichtung zur jeweiligen Aufnahme einer Spulenwicklung.

Jede Zahneinrichtung enthält einen bogenförmigen ersten und zweiten Ringabschnitt, wobei eine Verbindungsvorrichtung mit einem ersten und zweiten Verbindungselement enthalten ist, wobei das erste Verbindungselement an dem ersten Ringabschnitt und das zweite Verbindungselement an dem zweiten Ringabschnitt vorgesehen, und wobei das erste und zweite Verbindungselement so formschlüssig miteinander verbindbar sind, dass in einem verbundenen Zustand wenigstens eine Aussparung zwischen dem ersten und zweiten Verbindungselement zum Aufnehmen eines Ausgleichelements vorgesehen ist, wobei das Ausgleichelement zur Erhöhung der Passung zwischen dem ersten und zweiten Verbindungselement ausgestaltet ist und die Mantelfläche der Aussparung vollständig von dem ersten und zweiten Verbindungselement umschlossen ist.

## Beschreibung

Die vorliegende Erfindung betrifft einen Stator für einen Elektromotor, insbesondere als Antrieb für eine Werkzeugmaschine, enthaltend wenigstens eine erste und zweite Zahneinrichtung zur jeweiligen Aufnahme einer Spulenwicklung.

Statoren als ein Bestandteil für Elektromotoren gemäß dem Stand der Technik weisen im Wesentlichen ein Ringelement sowie ein Anzahl an Zahnelementen auf. Die Zahnelemente erstrecken sich dabei von einer inneren Mantelfläche des Ringelements zu einem Mittelpunkt des Ringelements. An den freien Ende der Zahnelemente verbleibt ein kreisförmiger Freiraum für einen Rotor. Jedes Zahnelement dient zum Aufnehmen und Halten einer Wickelspule auf leitfähigem Spulendraht zum entsprechenden Erzeugen eines Magnetfeldes.

Insbesondere bei kleinen Statoren ist die Umwicklung der einzelnen Zahnelemente mit einem Spulendraht für gewöhnlich mit einem hohen technischen Aufwand verbunden. Der zur Verfügung stehende Raum zwischen benachbarten Zahnelementen ist häufig eng bemessen, sodass eine schnelles und vor allem ordentliches Wickeln einer Spule um ein Zahnelement viel Zeit, eine aufwendige Wickelvorrichtung sowie hohe Kosten erzeugt.

Es ist damit Aufgabe der vorliegenden Erfindung das vorstehend beschriebene Problem zu lösen.

Die Aufgabe wird gelöst durch den Gegenstand des unabhängigen Patentanspruchs 1.

Vorteilhafte Ausführungsformen des erfindungsgemäßen Gegenstands sind in den abhängigen Patentansprüchen enthalten.

Die Aufgabe wird insbesondere gelöst durch einen Stator für einen Elektromotor, insbesondere als Antrieb für eine Werkzeugmaschine, enthaltend wenigstens eine erste und zweite Zahneinrichtung mit jeweils einem radial angeordneten Stegelement zur Aufnahme einer Spulenwicklung.

Erfindungsgemäß ist vorgesehen, dass jede Zahneinrichtung einen bogenförmigen ersten und zweiten Ringabschnitt enthält, wobei eine Verbindungsvorrichtung mit einem ersten und zweiten Verbindungselement enthalten ist, wobei das erste Verbindungselement an dem ersten Ringabschnitt und das zweite Verbindungselement an dem zweiten Ringabschnitt vorgesehen, und wobei das erste und zweite Verbindungselement so formschlüssig miteinander verbindbar sind, dass in einem verbundenen Zustand wenigstens eine Aussparung zwischen dem ersten und zweiten Verbindungselement zum Aufnehmen eines Ausgleichelements vorgesehen ist, wobei das Ausgleichelement zur Erhöhung der Passung zwischen dem ersten und zweiten Verbindungselement ausgestaltet ist und die Mantelfläche der Aussparung vollständig von dem ersten und zweiten Verbindungselement umschlossen ist.

Die Passung kann auch als Pass- oder Passungsgenauigkeit verstanden werden.

Gemäß einer weiteren vorteilhaften Ausführungsform kann es möglich sein, dass das erste Verbindungselement an einem freien Ende des bogenförmigen Ringabschnitts und das zweite Verbindungselement im Wesentlichen an einem ersten Ende des Stegelements positioniert ist.

Entsprechend einer weiteren vorteilhaften Ausführungsform kann es möglich sein, dass das erste Verbindungselement an einem freien Ende des bogenförmigen Ringabschnitts und das zweite Verbindungselement im Wesentlichen an einem ersten Ende des Stegelements positioniert ist.

Gemäß einer weiteren vorteilhaften Ausführungsform kann es möglich sein, dass die Verbindungsvorrichtung als Fügeverbindung ausgestaltet ist.

Gemäß einer weiteren vorteilhaften Ausführungsform kann es möglich sein, dass die Wegstrecke der Trennlinie der Fügeverbindung zwischen dem ersten und zweiten Verbindungselement länger ist als eine Breite einer Zahneinrichtung. Hierdurch ergibt sich eine möglichst lange Verbindungslinie bzw. Trennlinie zwischen angrenzenden Verbindungselementen, wodurch der magnetische Fluss zwischen diesen zueinander angrenzenden Verbindungselementen wenig negativ beeinträchtigt wird.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine Werkzeugmaschine mit einem Antrieb gemäß einer bespielhaften Ausführungsform;
- Figur 2: eine perspektivische Seitenansicht auf einen Stator und Rotor als Bestandteil des Antriebs;
- Figur 3: eine perspektivische Seitenansicht auf den Stator mit einer Anzahl an Zahneinrichtungen;
- Figur 4: eine Vorderansicht auf zwei benachbarte Zahneinrichtungen mit einer Verbindungsvorrichtung enthaltend ein erstes und zweites Verbindungselement gemäß einer ersten Ausführungsform;
- Figur 5a: eine Detailansicht auf ein Ausgleichelement zwischen einem ersten und zweiten Verbindungselement; und
- Figur 5b: eine Schnittansicht entlang der Schnittlinie A-A in Figur 5a auf ein Ausgleichelement gemäß einer bespielhaften Ausführungsform.

### Ausführungsbeispiele:

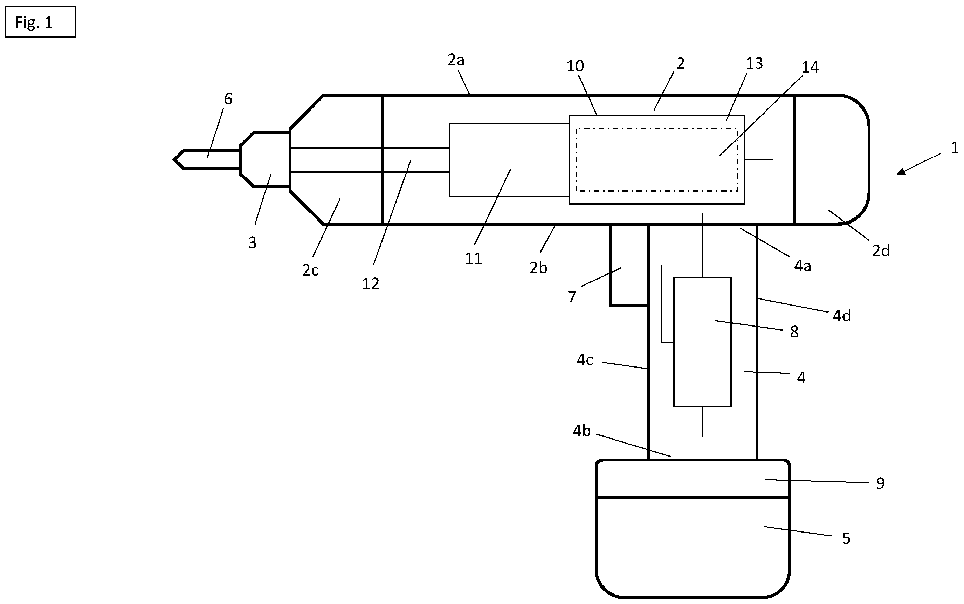

Figur 1 zeigt eine Werkzeugmaschine 1 in Form eines Akku-Schraubers gemäß einer bespielhaften Ausführungsform.

Alternativ kann die Werkzeugmaschine 1 auch in Form eines Bohrhammer, Kombihammer, Bohrmaschine, Säge, Schleifgeräts oder dergleichen ausgestaltet sein.

Wie in Figur 1 gezeigt, enthält die Werkzeugmaschine 1 gemäß der bespielhaften Ausführungsform im Wesentlichen ein Gehäuse 2, eine Werkzeugaufnahme 3, einen Handgriff 4 und eine Energieversorgung 5.

Das Gehäuse 2 weist eine Oberseite 2a, eine Unterseite 2b, ein vorderes Ende 2c und ein hinteres Ende 2d auf.

An dem vorderen Ende 2c des Gehäuses 2 ist die Werkzeugaufnahme 3 positioniert, die zum Aufnehmen und Halten eines Werkzeuges 6 dient. In dem vorliegenden Fall ist das Werkzeug 6 als Schrauber-Bit (oder nur Bit genannt) ausgestaltet.

Der Handgriff 4 dient zum Halten und Führen der Werkzeugmaschine 1 durch einen (in den Figuren nicht gezeigten) Anwender. Der Handgriff 4 weist ein oberes Ende 4a, ein unteres Ende 4b, eine Vorderseite 4c und eine Rückseite 4d auf. Das obere Ende 4a des Handgriffs 4 ist mit der Unterseite 2b des Gehäuses 2 der Werkzeugmaschine 1 verbunden.

Wie Figur 1 erkennbar, ist an der Vorderseite 4c des Handgriffs 4 ein Betätigungsschalter 7 positioniert. Der Betätigungsschalter 7 dient zum Aktivieren der Werkzeugmaschine 1. Im Inneren des Handgriffs 4 ist eine Steuerungseinrichtung 8 der Werkzeugmaschine 1 positioniert und dient zum Steuern sowie Regeln der Funktionen der Werkzeugmaschine 1.

An der Unterseite 2b des Gehäuses 2 der Werkzeugmaschine 1 ist eine Fussvorrichtung 8 mit einer Werkzeugmaschinenschnittstelle 9 vorgesehen. Die Werkzeugmaschinenschnittstelle 9 dient zum wiederlösbaren Verbinden der Werkzeugmaschine 1 mit der Energieversorgung 5.

Die Energieversorgung 5 ist in der vorliegenden Ausführungsform als Akkumulator ausgestaltet. Gemäß einer alternativen und in den Figuren nicht gezeigten Ausführungsform kann die Energieversorgung 5 auch als Stromkabel zum wiederlösbaren Verbinden der Werkzeugmaschine 1 mit einer Netzstromquelle (auch Steckdose genannt) ausgestaltet sein.

Im Inneren des Gehäuses 2 der Werkzeugmaschine 1 ist des Weiteren ein Antrieb 10, eine Getriebevorrichtung 11 sowie eine Antriebswelle 12 vorgesehen. Der Antrieb 10 ist in dem vorliegenden Ausführungsbeispiel als Elektromotor ausgestaltet und dient zum Erzeugen eines Drehmoments. Der als Elektromotor ausgestaltete Antrieb 10, die Getriebevorrichtung 11 und die Antriebswelle 12 sind dabei so zueinander in dem Gehäuse 2 angeordnet bzw. positioniert, dass ein von dem Antrieb 10 erzeugtes Drehmoment über die Getriebevorrichtung 11, die Antriebswelle 12 und schließlich auf die Werkzeugaufnahme 3 übertragen werden kann.

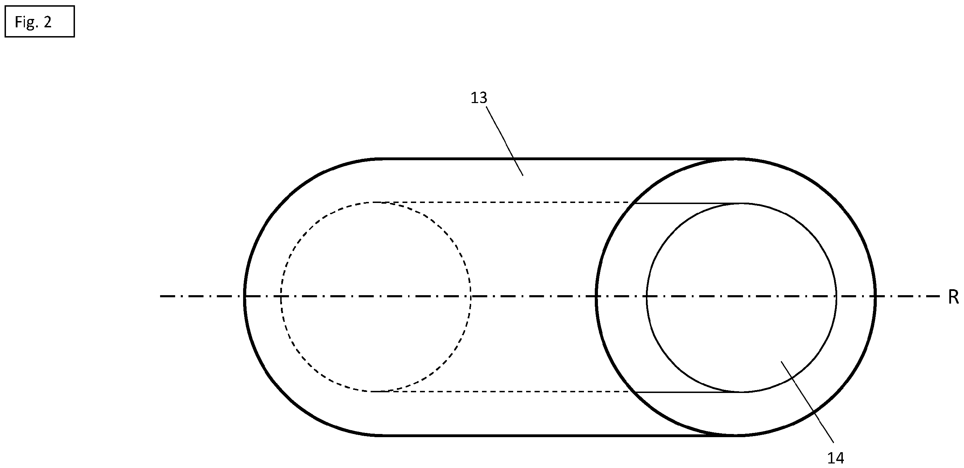

Der Antrieb 10 enthält wiederum im Wesentlichen einen Stator 13 und einen in dem Stator 13 positionierten und relativ zu dem Stator 13 drehbaren Rotor 14, vgl. Figur 2. Der Rotor 14 dreht sich dabei um eine Mittelachse MA des Stators 13.

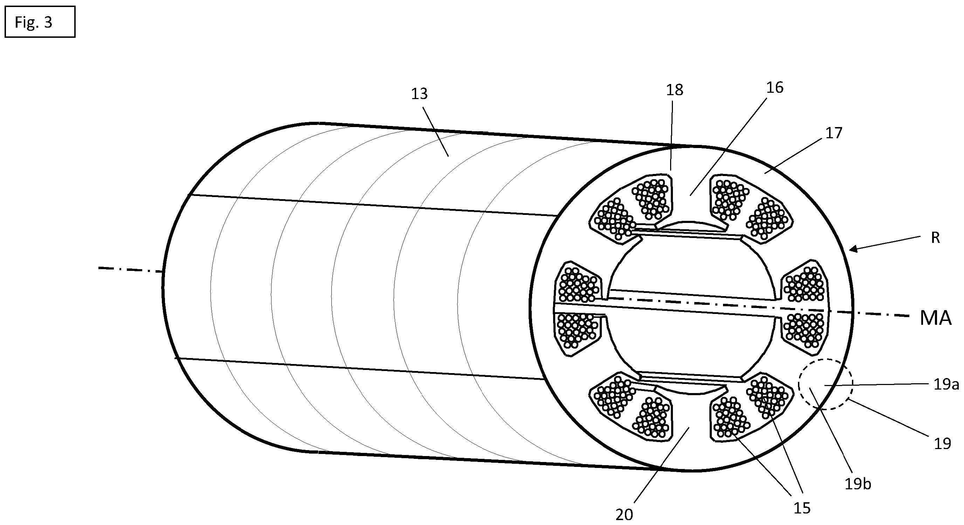

Wie in Figur 3 bis 5 ersichtlich, enthält der Stator 13 gemäß der beispielhaften Ausführungsform sechs Zahneinrichtung 20. Gemäß alternativer Ausführungen kann der Stator 13 auch mehr oder weniger als sechs Zahneinrichtungen 20 enthalten.

Jede einzelne Zahneinrichtung 20 dient zum Aufnahme einer Spulenwicklung 15 aus einem leitfähigen Draht. Bei dem Werkstoff des leitfähigen Drahts kann es sich um beispielsweise um Kupfer oder eine Kupferlegierung handeln.

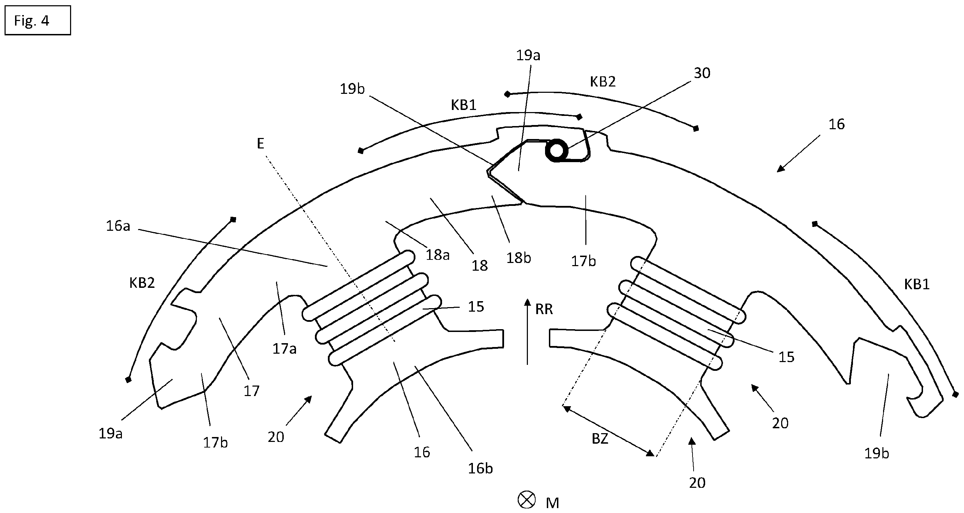

Jede Zahneinrichtung 20 enthält ein Stegelement 16 sowie einen bogenförmigen ersten Ringabschnitt 17 und zweiten Ringabschnitt 18. Wie in den Figuren 3 und 4 zu erkennen ist, formen die einzelnen Ringabschnitte 17, 18 in einem Zusammenschluss einen geschlossenen, kreisförmigen Ring R.

Das Stegelement 16 weist ein erstes Ende 16a und zweites Ende 16b auf, wobei zwischen dem ersten und zweiten Ende 16a, 16b die Spulenwicklung 15 angebracht wird. Das jeweilige erste Ende 16a des Stegelements 16 ist dabei an einer Mantelinnenfläche des von den einzelnen Ringabschnitten 17, 18 entstandenen Rings R positioniert. Das zweite Ende 16b des Stegelements 16 ragt zu einem Mittelpunkt M des Rings R. Die Länge der Stegelemente 16 sind so gewählt, dass eine kreisförmige Aussparung im Innen des Stators 13 verbleibt. In diese Aussparung kann der Rotor 14 platziert werden.

Wie in den Figuren ersichtlich, weist sowohl der erste und zweite Ringabschnitt 17, 18 jeweils ein erstes und zweites Ende 17a, 17b, 18a, 18b auf. Das erste Ende 17a des ersten Ringabschnitts 17 ist dabei an dem ersten Ende 16a des Stegelements 16 positioniert. Das erste Ende 18a des zweiten Ringabschnitts 18 ist ebenfalls an dem ersten Ende 16a des Stegelements 16 positioniert. Die beiden Ringabschnitt 17, 18 erstrecken sich in entgegengesetzte Richtungen um den Ring R.

In Figur 4 ist eine Zahneinrichtung 20 gemäß einer ersten Ausführungsform dargestellt, erste und zweite Ringabschnitt 17, 18 weisen einen im Wesentlichen gleich langen Kreisbogen KB1, KB2 auf.

Darüber hinaus enthält jede Zahneinrichtung eine Verbindungsvorrichtung 19 mit einem ersten und zweiten Verbindungselement 19a, 19b. Das erste Verbindungselement 19a ist dabei an dem ersten Ringabschnitt 17 und das zweite Verbindungselement 19b ist an dem zweiten Ringabschnitt 18 positioniert.

In dem vorliegenden Ausführungsbeispiel ist die Verbindungsvorrichtung 19 als Fügeverbindung ausgestaltet. Die als Fügeverbindung ausgestaltete Verbindungsvorrichtung 19 dient dabei zum wiederlösbaren Verbinden der einzelnen Ringabschnitte 17, 18 und damit der einzelnen Zahneinrichtung 20 zu einem durchgehenden ringförmigen Stator 13.

Das erste Verbindungselement 19a an dem ersten Ringabschnitt 17 ist im Wesentlichen in Form eines Hakens ausgestaltet. Das zweite Verbindungselement 19b an dem zweiten Ringabschnitt 18 ist wiederum als ein zu dem Haken korrespondierenden Aufnahmebereich ausgestaltet, sodass das erste Verbindungselement 19a mit dem zweiten Verbindungselement 19b in Eingriff gebracht werden kann, vgl. Figur 4. Durch den Eingriff des ersten Verbindungselements 19a in das zweite Verbindungselement 19b werden der erste und zweite Ringabschnitt 17, 18 miteinander verbunden.

Wie in Figur 4 dargestellt, ist das erste und zweite Verbindungselement 19a, 19b dabei jeweils so ausgestaltet, dass in einem verbundenen Zustand eine Aussparung 30 zwischen dem ersten und zweiten Verbindungselement 19a, 19b verbleibt. Die Aussparung 30 dient zum Aufnehmen und Halten eines Ausgleichelements 31. Die Aussparung 30 ist dabei im Wesentlichen kreisrund ausgestaltet. Andere Ausgestaltungen für die Aussparung 30 sind jedoch auch möglich. Das Ausgleichelement 31 ist im Wesentlichen zylindrisch ausgestaltet und weist eine Querschnittsfläche auf, die etwas größer ist als die Querschnittsfläche der Aussparung 30. Darüber hinaus besteht das Ausgleichelement 31 aus Metall oder Kunststoff. Insbesondere kann das Ausgleichelement 31 in Form eines Spannstifts, einer Spannhülse, eines Kerbstifts, eines Klemmstifts oder eines Kerbstifts ausgestaltet sein.

Wenn das erste und zweite Verbindungselement 19a, 19b wie in Figur 4 gezeigt miteinander verbunden sind, wird das Ausgleichelement 31 in die Aussparung 30 zwischen dem ersten und zweiten Verbindungselement 19a, 19b eingepresst. Die Mantelfläche der Aussparung 30 ist dabei vollständig von dem ersten und zweiten Verbindungselement 19a, 19b umschlossen. Das Ausgleichelement 31 dient zur Erhöhung der Passung zwischen dem ersten und zweiten Verbindungselement 19a, 19b.

Das Ausgleichelement 31 ist im Wesentlichen zylindrisch ausgestaltet und weist eine Querschnittsfläche auf, die etwas größer ist als die Querschnittsfläche der Aussparung 30. Gemäß einer ersten Ausführungsform besteht das Ausgleichelement aus Metall, z.B. Stahl oder Kupfer. Gemäß einer zweiten Ausführungsform besteht das Ausgleichelement 31 aus Kunststoff, z.B. Polyamid, oder einem aushärtbaren Kunststoff (z.B. in Form eines Klebstoffs). Insbesondere kann das Ausgleichelement 31 in Form eines Spannstifts, einer Spannhülse, eines Kerbstifts, eines Klemmstifts oder eines Kerbstifts ausgestaltet sein.

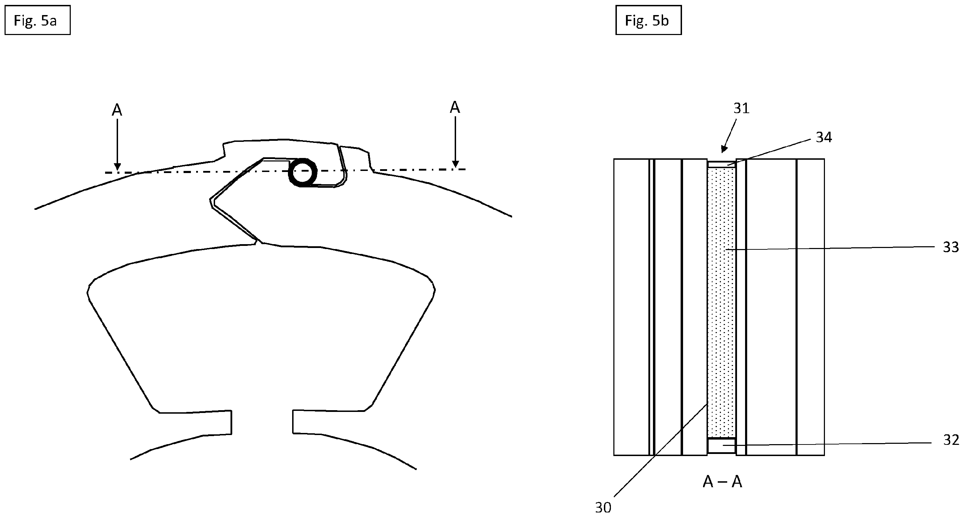

Darüber hinaus ist das Ausgleichelement 31 gemäß einer weiteren Ausführungsform aus mehreren Komponenten zusammengesetzt. Wie in Figur 5a und 5b angedeutet, wird das Ausgleichelement 31 dadurch gebildet, dass zunächst eine Basisabdichtung 32 an einem ersten Ende der Aussparung 30 positioniert wird. Die Basisabdichtung 32 ist hierbei in Form eines Klebestopfens ausgestaltet, sodass das entsprechende Ende der Aussparung 30 nach einem Aushärten des Klebestopfens versiegelt ist. Anschließend wird durch das andere (gegenüberliegende) freie Ende der Aussparung ein Granulat 33 eingefüllt. Das Granulat 33 bildet das eigentliche Ausgleichelement 31. Wenn sich der Sand mit dem Klebestopfen verbindet, wird eine relativ starke Verbindung geschaffen. Das Granulat 33 kann dabei aus Sand oder kleinen Glaskugeln bestehen. Es ist auch möglich, dass das Granulat 33 eine Mischung aus Sand und Glaskugel ist. An dem noch offen Ende der Aussparung 30 wird eine Verschlusskappe 34 aus Kunststoff positioniert.

Des Weiteren ist in Figur 4 erkennbar, dass das erste Verbindungselement 19a eine erste schräg zu einer Zahnsegmentebene E verlaufende Anlagefläche 21a und das zweite Verbindungselement 19b eine zweite schräg zu der Zahnsegmentebene E verlaufende Anlagefläche 21b aufweist. Wenn das erste und zweite Verbindungselement 19a, 19b miteinander verbunden sind, verläuft eine Trennlinie zwischen der ersten und zweiten Anlagefläche 21a, 21b schräg zu der Zahnsegmentebene E. Die Wegstrecke der Trennlinie der Fügeverbindung zwischen dem ersten und zweiten Verbindungselement 19a, 19b länger ist als eine Breite ZB einer Zahneinrichtung 20.

Darüber hinaus weist das erste und zweite Verbindungselement 19a, 19b jeweils eine Erhebung 23a, 23b auf. Jede Erhebung 23a, 23b erstreckt sich dabei in radiale Richtung RR bzw. von der äußeren Mantelfläche des Stators 13 nach außen. Die Erhebung 23a an dem ersten Verbindungselement 19a enthält einen langen Kreisbogen KB3 und Erhebung 23b an dem zweiten Verbindungselement 19b enthält einen kurzen Kreisbogen KB4. Wie in Figur 4 zu erkennen ist, weist sowohl die Erhebung 23a, 23b des ersten und zweiten Verbindungselements 19a, 19b eine sich im Wesentlichen radial nach außen erstreckende Seitenfläche auf.

Die Erhebung 23a, 23b an dem ersten und zweiten Verbindungselement 19a, 19b können jedoch auch einen im Wesentlichen gleich langen Kreisbogen aufweisen.

Wenn das erste und zweite Verbindungselement 19a, 19b miteinander verbunden sind, ergänzen sich die beiden Erhebungen 23a, 23b zu einer im Wesentlichen durchgehenden Erhebung 23 an der äußeren Mantelfläche des Stators 13, wobei diese durchgehende Erhebung 23 eine im Wesentlichen rechteckige Querschnittsfläche aufweist.

Die durchgehende Erhebung 23 an der äußeren Mantelfläche des Stators 13 dient zur korrekten Orientierung bzw. Ausrichtung des Stators 13 bei der Montage zu einem Antrieb 10 einer Werkzeugmaschine 1.

### Bezugszeichen

- 1: Werkzeugmaschine
- 2: Gehäuse der Werkzeugmaschine
- 2a: Oberseite des Gehäuses der Werkzeugmaschine
- 2b: Unterseite des Gehäuses der Werkzeugmaschine
- 2c: vorderes Ende des Gehäuses der Werkzeugmaschine
- 2d: hinteres Ende des Gehäuses der Werkzeugmaschine
- 3: Werkzeugaufnahme
- 4: Handgriff
- 4a: oberes Ende des Handgriffs
- 4b: unteres Ende des Handgriffs
- 4c: Vorderseite des Handgriffs
- 4d: Rückseite des Handgriffs
- 5: Energieversorgung
- 6: Werkzeug
- 7: Betätigungsschalter
- 8: Steuerungseinrichtung
- 9: Werkzeugmaschinenschnittstelle
- 10: Antrieb
- 11: Getriebevorrichtung
- 12: Antriebswelle
- 13: Stator
- 14: Rotor
- 15: Spulenwicklung
- 16: Stegelement
- 16a: erstes Ende des Stegelements
- 16b: zweites Ende des Stegelements
- 17: erster Ringabschnitt
- 17a: erstes Ende des ersten Ringabschnitts
- 17b: zweites Ende des ersten Ringabschnitts
- 18: zweiter Ringabschnitt
- 18a: erstes Ende des zweiten Ringabschnitts
- 18b: zweites Ende des zweiten Ringabschnitts
- 19: Verbindungsvorrichtung
- 19a: erstes Verbindungselement
- 19b: zweites Verbindungselement
- 20: Zahneinrichtung
- 23: durchgehende Erhebung
- 23a: erste Erhebung
- 23b: zweite Erhebung
- 21a: erste Anlagefläche
- 21b: zweite Anlagefläche
- 30: Aussparung
- 31: Ausgleichelement
- 32: Basisabdichtung
- 33: Granulat
- 34: Verschlusskappe

- E: Zahnsegmentebene
- M: Mittelpunkt
- MA: Mittelachse
- RR: radiale Richtung
- R: kreisförmiger Ring
- KB1: erster Kreisbogen
- KB2: zweiter Kreisbogen
- VL: Verbindungslinie

## Patentansprüche

1. Stator (13) für einen Elektromotor, insbesondere als Antrieb für eine Werkzeugmaschine, enthaltend wenigstens eine erste und zweite Zahneinrichtung (20) zur jeweiligen Aufnahme einer Spulenwicklung (15),
**dadurch gekennzeichnet, dass** jede Zahneinrichtung (20) einen bogenförmigen ersten und zweiten Ringabschnitt (17, 18) enthält, wobei eine Verbindungsvorrichtung (19) mit einem ersten und zweiten Verbindungselement (19a, 19b) enthalten ist, wobei das erste Verbindungselement (19a) an dem ersten Ringabschnitt (17) und das zweite Verbindungselement (19b) an dem zweiten Ringabschnitt (18) vorgesehen, und wobei das erste und zweite Verbindungselement (19a, 19b) so formschlüssig miteinander verbindbar sind, dass in einem verbundenen Zustand wenigstens eine Aussparung (30) zwischen dem ersten und zweiten Verbindungselement (19a, 19b) zum Aufnehmen eines Ausgleichelements (31) vorgesehen ist, wobei das Ausgleichelement (31) zur Erhöhung der Passung zwischen dem ersten und zweiten Verbindungselement (19a, 19b) ausgestaltet ist und die Mantelfläche der Aussparung (30) vollständig von dem ersten und zweiten Verbindungselement (19a, 19b) umschlossen ist.

2. Stator (13) nach Anspruch 1,
**dadurch gekennzeichnet, dass** das erste Verbindungselement (19a) an einem freien Ende des bogenförmigen Ringabschnitts (17, 18) und das zweite Verbindungselement (19b) im Wesentlichen an einem ersten Ende des Stegelements (19a, 19b) positioniert ist.

3. Stator (13) nach Anspruch 1 oder 2,
**dadurch gekennzeichnet, dass** die Verbindungsvorrichtung (19) als Fügeverbindung ausgestaltet ist.

4. Stator (13) nach wenigstens einem der Ansprüche 1 bis 3,
**dadurch gekennzeichnet, dass** die Wegstrecke der Trennlinie der Fügeverbindung zwischen dem ersten und zweiten Verbindungselement (19a, 19b) länger ist als eine Breite (ZB) einer Zahneinrichtung (20).
